# DEMANDE DE BREVET EUROPEEN

(11) **EP 2 189 884 A1**
(43) Date de publication de la demande: **26.05.2010**
(21) Numéro de dépôt: 08305813.1
(22) Date de dépôt: 18.11.2008
(51) Int. Cl.: G06F 3/048, G06F 21/00

(54) **Clavier virtuel projeté et sécurisé**

(71) Demandeur: Gemalto SA, 92190 Meudon (FR)
(72) Inventeur: Rouchouze, Bruno, 83270, St Cyr sur Mer (FR)

(57) **Abrégé**

Procédé de saisie d'un texte dans un système réparti comportant au moins un dispositif sécurisé appelé serveur, communiquant avec au moins un dispositif électronique appelé terminal.

Ce procédé permet de préparer une image en associant des valeurs à certaines des zones la composant.

Cette image est projetée à l'utilisateur qui va toucher des zones de l'image qu'il souhaite sélectionner comme il le ferait des touches d'un clavier.

Les mouvements de ces doigts sont analysés, et la position des touches virtuelles qu'il a sélectionnées est retransmise au serveur qui fera la corrélation entre ces positions et les valeurs associées précédemment.

## Description

L'invention concerne un clavier virtuel projeté et sécurisé.

L'invention porte en particulier sur un procédé de saisie basé sur le positionnement spatial des doigts en référence à une image projetée.

Le brevet européen EP980039 décrit un procédé pour la saisie de caractères par l'intermédiaire d'un clavier virtuel. Un clavier virtuel est un moyen de saisie de textes en l'absence d'un périphérique comportant une touche par caractère, et qui est particulièrement destiné à des équipements tels que la télévision interactive, des téléphones cellulaires, ou encore des terminaux personnels PDA. Les claviers virtuels trouvent un nouveau terrain d'application dans l'univers des échanges sécurisés.

On connaît dans l'état de la technique le brevet PCT W09914657 décrivant un clavier virtuel utilisé sur écran d'ordinateur pour émuler un clavier conventionnel. Les coordonnées des touches sur le clavier virtuel sont conservées en mémoire sous forme d'un tableau par l'ordinateur. Ces coordonnées de touches sont classées dans le tableau en fonction de leur fréquence d'occurrence. Un dispositif de pointage permet de sélectionner les touches sur le clavier virtuel. Les points d'entrée générés par le dispositif de pointage sont comparés un à un aux coordonnées de touches conservées dans le tableau de coordonnées. Pour décider si le point d'entrée correspond à une touche considérée, on applique des critères définis à une fonction de borne. En cas de correspondance, la touche est affectée au point d'entrée, et la recherche s'arrête. La recherche de touche correspondante se poursuit jusqu'à détection d'une correspondance ou jusqu'à la fin du tableau.

Le brevet américain US5008847 décrit un autre type de clavier virtuel comportant un moyen de sélection par curseur déplacé sur une représentation graphique d'un clavier.

Ces solutions de l'art antérieur présentent l'inconvénient d'avoir une géométrie fixe, et facilement espionable dans le cadre de la saisie d'une information secrète. De plus les solutions de l'art antérieur sont particulièrement vulnérables dans l'éventualité de la présence d'un module hostile sur le dispositif électronique en charge de la présentation du clavier virtuel.

Le but de la présente invention est de remédier à cet inconvénient en proposant un procédé sécurisé pour la saisie d'un texte à l'aide d'un clavier virtuel.

L'invention est en premier lieu un procédé de saisie d'un texte dans un système réparti comportant au moins un dispositif sécurisé appelé serveur, communiquant avec au moins un dispositif électronique appelé terminal, le procédé comporte au moins
- une étape de pré-calcul, dans laquelle au moins une table de correspondance est établie entre une image, au moins une zone de l'image, et au moins une valeur,
- une étape de transmission de l'image, depuis le serveur vers le terminal,
- une étape de projection, par le terminal, de l'image, à destination de l'utilisateur
- une étape repérage des positions spatiales des doigts de l'utilisateur au regard de la projection de l'image
- une étape de restitution des positions spatiales au serveur
- une étape d'interprétation, par le serveur des positions reçues au regard de la table de correspondance afin d'obtenir des valeurs dites valeurs candidates.

La projection peut se faire contre une surface faisant office d'écran.

Dans un mode de réalisation, l'image représente plusieurs zones géométriquement distinctes. Ces zones peuvent représenter un ensemble de touches.

Dans un mode de réalisation, la table de correspondance permet d'appliquer les positions à une seconde image.

Dans un mode de réalisation, la table de correspondance permet d'appliquer des décalages aux positions afin d'obtenir des positions corrigées.

Dans un mode de réalisation, le procédé comprend également une étape préalable au cours de laquelle l'image peut, soit être sélectionnée parmi une liste d'images enregistrées dans une mémoire accessible par le serveur, soit générée.

L'invention est également un terminal de saisie d'un texte, en relation avec au moins un dispositif sécurisé appelé serveur, ce terminal comporte des moyens pour
- recevoir, depuis le serveur, une image
- projeter cette image sur un support, à destination de l'utilisateur
- repérer les positions spatiales des doigts de l'utilisateur au regard de la projection de l'image
- restituer les positions spatiales au serveur

Dans un mode de réalisation, les moyens pour repérer les positions spatiales des doigts de l'utilisateur peuvent être des moyens de capture vidéo, des capteurs de pression positionnés dans ledit support de projection ou encore des émetteurs et récepteurs radars.

Un avantage de l'invention est que l'image, envoyée par le serveur n'est pas interprété par le terminal. En effet le fait que l'image soit monolithique, et non pas dissociée en zones rend le terminal incapable d'interpréter les positions de doigts qu'il a relevé.

Ainsi le procédé est particulièrement adapté au cas où le serveur ne fait pas confiance au terminal.

D'autres caractéristiques et avantages de l'invention ressortiront clairement de la description qui en est faite ci-après, à titre indicatif et nullement limitatif, en référence aux dessins annexés dans lesquels :
- La figure 1 représente un exemple d'implémentation de l'invention.
- La figure 2 représente un exemple d'implémentation de l'invention avec un dispositif intermédiaire destiné à établir la communication entre le terminal et le serveur.
- La figure 3 représente un exemple d'image utilisable par l'invention dans lequel les zones graphiques représentant les touches sont organisées en rond
- La figure 4 représente un exemple d'image utilisable par l'invention dans lequel les zones graphiques représentant les touches sont mélangées
- La figure 5 représente un exemple d'image utilisable par l'invention dans lequel les zones graphiques représentant les touches sont présentées sous la forme d'une carte géographique
- La figure 6 illustre
- La figure 7 représente

L'invention peut être, de manière schématique et aucunement limitative, notamment un procédé de saisie d'un texte dans un système réparti comportant au moins un dispositif sécurisé appelé serveur, communiquant avec au moins un dispositif électronique appelé terminal.

Ce procédé peut entre autre permettre de préparer une image en associant des valeurs à certaines des zones la composant.

Cette image est projetée à l'utilisateur qui va toucher des zones de l'image qu'il souhaite sélectionner comme il le ferait des touches d'un clavier.

Les mouvements de ces doigts sont analysés, et les positions des touches virtuelles qu'il a sélectionnées sont retransmises au serveur qui fera la corrélation entre ces positions et les valeurs associées précédemment.

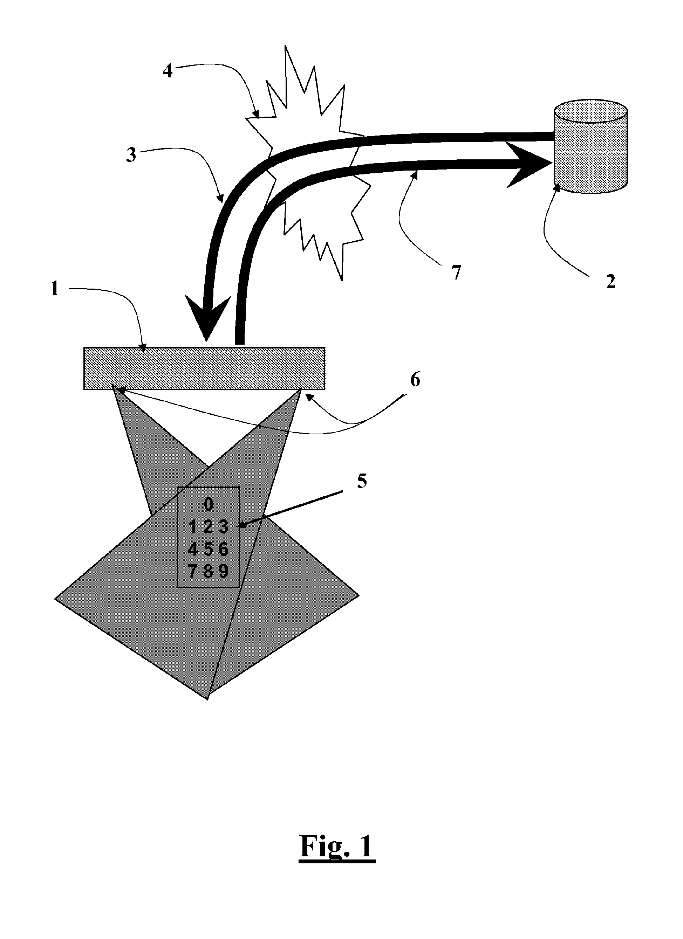

Ainsi la figure 1 illustre une implémentation de l'invention dans laquelle un utilisateur tente d'accéder à un service distant, hébergé par un serveur 2, via un réseau 4. Afin d'authentifier l'utilisateur, le serveur 2 transmet 3 une image à un terminal 1 directement en contact avec l'utilisateur. Ce terminal est muni de moyens lui permettant d'afficher 5 l'image reçue, à la vue de l'utilisateur. Dans l'exemple illustré par la figure 1, l'affichage de l'image se fait par projection 5 sur un support. Dans une étape préalable, le serveur 2 « construit » l'image en identifiant, sur celle-ci, des zones particulières auxquelles sont associées des informations. Un exemple est l'image d'un pavé numérique, et à chacune des zones correspondant à chacune des touches est associée la valeur de la touche. Dans un autre exemple une carte géographique d'un pays peut être divisée en zone, et à chacun de ces zones peut être affecté une valeur. Selon les modes de réalisation, ces informations de corrélation entre l'image et les zones, et les valeurs associées, peuvent être stockées dans une mémoire du serveur, ou dans toute mémoire accessible par le serveur.

Dans un mode particulièrement avantageux d'implémentation de l'invention, ces informations de corrélation peuvent être enregistrées dans un dispositif électronique sécurisé. Ce dispositif électronique sécurisé peut être par exemple un dispositif mobile sécurisé permettant une indépendance de la fonctionnalité de serveur et du matériel serveur. Ainsi, tout dispositif électronique communiquant peut potentiellement devenir serveur s'il est mis en relation avec le dispositif mobile sécurisé contenant les informations de corrélation.

Le terminal 1 est doté de moyens lui permettant d'analyser les mouvements autour de la projection 5. Cette analyse comprend plusieurs étapes et plusieurs dispositifs. En effet, cette analyse comprend une capture des mouvements à proximité de l'image affichée 5, et leur analyse afin d'en extraire des positions dédites de saisies. Ces positions de saisies vont être représentatives de la sélection, par l'utilisateur, de zones géographique de l'image 5. Une illustration particulièrement parlante de cette analyse est donnée par l'exemple où l'image 5 représente un pavé numérique d'ordinateur. L'utilisateur approche ses doigts à la surface de l'image 5 et pose les doigts sur les zones de l'image correspondant aux touches du code numérique qu'il souhaite saisir. Des l'ors, l'analyse selon l'invention consiste en une capture des mouvements des doigts de l'utilisateur à proximité de l'image 5 du pavé numérique 5, et en leur analyse afin de proposer des positions correspondant aux zones que l'utilisateur à touché.

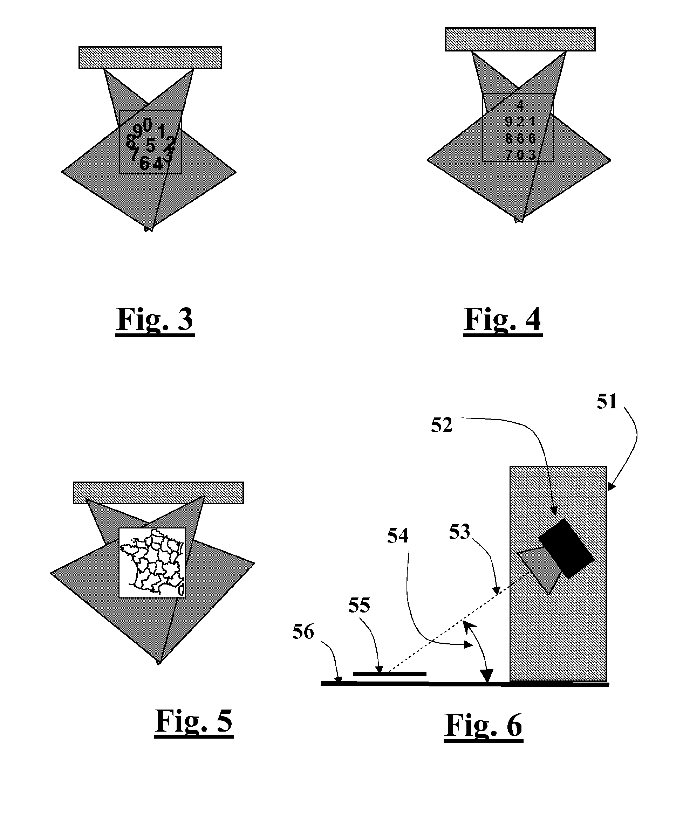

Dans l'exemple illustré dans la figure 1, cette analyse peut se faire par l'usage de moyen de capture vidéo 6. Tout autre moyen de repérage de mouvement d'un objet physique dans un espace défini peut être utilisé pour analyser les mouvements solutions peuvent être utilisées Dans un mode particulier d'implémentation, deux caméra sont associées afin d'obtenir une précision optimale dans l'analyse de mouvement. Dans un mode de réalisation, les moyens de capture vidéo pourront présenter, avec le support d'affichage 5, un angle positif comme illustré par la figure 6.

Cette analyse est retournée 7 au terminal 2 qui va à son tour traiter ces données, au regard des informations de corrélations entre l'image 5, les zones qui la composent, et les valeurs qui leurs ont été associées.

Le résultat de cette authentification décidera de la suite à donner aux requêtes de l'utilisateur.

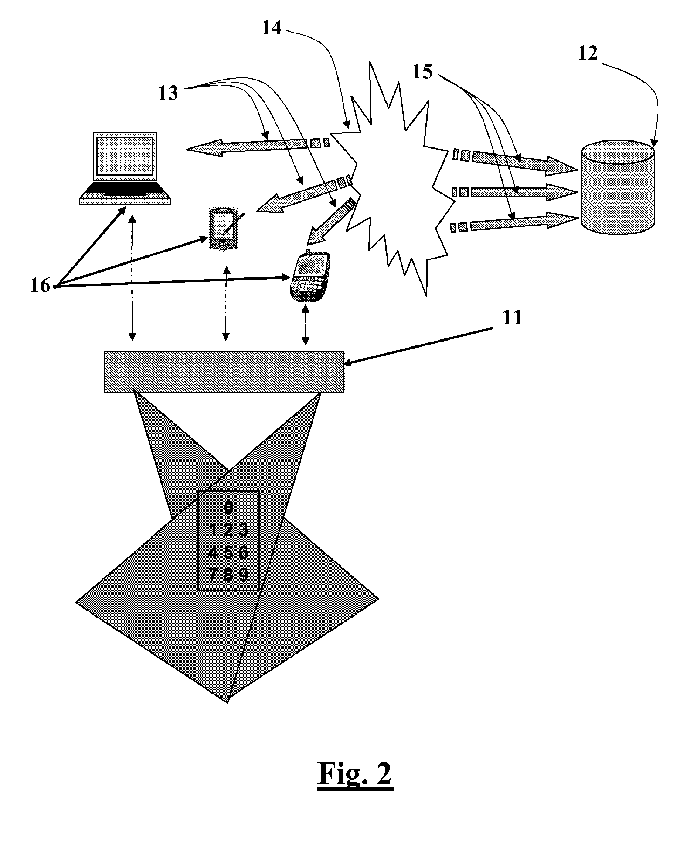

La figure 2 illustre une implémentation de l'invention dans laquelle le terminal 11 est en relation avec le serveur 12 grâce à un dispositif électronique communicant 16, lui-même apte à communiquer avec le serveur 12 au travers d'un réseau 14, par exemple de radiotéléphonie. Ce mode de réalisation est particulièrement adapté au cas où le dispositif électronique communicant et le serveur proposent à l'utilisateur un service nécessitant une authentification forte, par exemple un service bancaire. A la vue de la grande diversité des dispositifs électroniques communicants, il est très difficile pour le serveur d'assoir la sécurité du service sur un dispositif qu'il ne contrôle pas et dont il n'est pas en mesure de garantir la sécurité. En associant le terminal au dispositif électronique, le serveur authentifie l'utilisateur au travers du canal de communication que représente le dispositif électronique, sans craindre d'éventuelles failles de sécurité chez celui-ci. En effet le dispositif communicant, tout comme le terminal voient passer une image dans un sens, et des positions dans un autre sens, mais sans avoir les informations permettant de mettre les deux en corrélations, et d'en tirer des valeurs exploitables. Dans un mode particulièrement avantageux de réalisation, le terminal possède des moyens d'authentification qui lui sont propre, et s'authentifie auprès du serveur afin que les échanges 13 et 15 se fassent au travers d'un canal de communication sécurisé, par exemple au moyen d'une clef de session, ce qui conforte encore la sécurité du système.

Dans les figures 3, 4 et 5 on peut voir différents exemple d'images utilisables selon l'invention. La figure 3 nous illustre le cas ou les zones qui composent l'image sont « mélangées » afin que la géographie du « clavier virtuel » que représente l'image change. De la même manière la figure 4 nous illustre le cas ou la géographie du « clavier virtuel » reste inchangée, mais les valeurs des zones sont réaménagées. Ces deux techniques peuvent avantageusement être combinées pour faire varier, à la fois l'organisation des zones, et leur ordre. Dans un mode particulièrement intéressant de l'invention, lors de chaque session l'image envoyée est, soit choisie parmi une liste d'image préétablie, soit générée. Cette précaution permet de se prémunir d'un éventuel enregistrement des échanges entre le terminal et le serveur lors de plusieurs sessions, et de faire une corrélation entre les informations fournies par chaque enregistrement.

La figure 5 représente un exemple d'image au travers desquelles la saisie d'une information se fait par convention symbolique. Par exemple l'image peut représenter une palette de couleur, et la convention entre l'utilisateur et le serveur est que l'utilisateur doit choisir les couleurs bleu vert et rouge. Le serveur

La figure 6 illustre une implémentation de l'invention dans laquelle les moyens d'analyser les mouvements en périphérie de la projection de l'image selon l'invention, présentent un angle positif avec le plan du support. Le terminal selon l'invention est représenté sur la figure par l'élément 51. Dans cet exemple, le terminal 51 projette une image 55 sur un plan 56. Ce plan peu par exemple être une surface plane sur laquelle le terminal serait posé. Le terminal possède en outre des moyens 52 d'analyse des mouvements. Comme illustré par l'axe symbolique 53, ce moyen est orienté de manière à analyser les mouvements en périphérie directe de la projection 55 de l'image. La figure 6 illustre le cas particulièrement avantageux ou le moyen d'analyse 52 présente un angle 54 positif avec la surface de projection 56. Cette implémentation particulière augmente significativement les performances de l'analyse des mouvements. Un angle 54 proche de 90 degrés offrira de grandes facilités d'analyse.

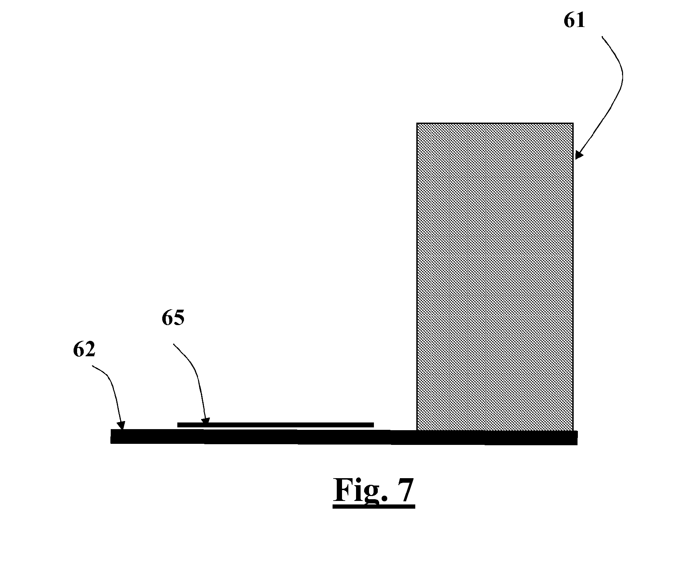

Dans un autre mode de réalisation, la figure 7 illustre le cas ou le dispositif 61 projette une image 65 selon l'invention, sur une surface 62 sensible à la pression. Cette surface 62 va donc être capable de repérer les endroits ou l'utilisateur pose ses doigts à sa surface, et restituer cette analyse au terminal 61.

Un avantage supplémentaire de l'invention est que, contrairement aux moyens de saisie standard, l'usage d'un terminal de saisie selon l'invention ne laisse pas de traces sur le clavier après son usage car la disparition de l'image fait par la même disparaitre toute référence. De la même façon il n'est pas possible d'étudier une éventuelle usure des touches afin d'en tirer une éventuelle information.

## Revendications

1. Procédé de saisie d'un texte dans un système réparti comportant au moins un dispositif sécurisé appelé serveur, communiquant avec au moins un dispositif électronique appelé terminal, **caractérisé en ce que** le procédé comporte
- une étape de pré-calcul, dans laquelle au moins une table de correspondance est établie entre une image, au moins une zone de ladite image, et au moins une valeur,
- une étape de transmission de ladite image, depuis ledit serveur vers ledit terminal,
- une étape de projection, par ledit terminal, de ladite image, à destination de l'utilisateur
- une étape repérage des positions spatiales des doigts de l'utilisateur au regard de ladite projection de ladite image
- une étape de restitution des dites positions spatiales audit serveur
- une étape d'interprétation, par le serveur des positions reçues au regard de ladite au moins une table de correspondance afin d'obtenir des valeurs dites valeurs candidates.

2. Procédé selon la revendication 1, **caractérisé en ce que** ladite projection se fait contre une surface faisant office d'écran.

3. Procédé selon la revendication 1 **caractérisé en ce que** ladite image représente plusieurs zones géométriquement distinctes.

4. Procédé selon la revendication 3 **caractérisé en que** ladite image représente un ensemble de touches.

5. Procédé selon la revendication 1 **caractérisé en ce que** ladite table de correspondance permet d'appliquer lesdites positions à une seconde image

6. Procédé selon la revendication 1 **caractérisé en ce que** ladite table de correspondance permet d'appliquer des décalages aux dites positions afin d'obtenir des positions corrigées.

7. Procédé selon la revendication 1 **caractérisé en ce que**, dans une étape préalable ladite image est sélectionnée parmi une liste d'images enregistrées dans une mémoire accessible par ledit serveur.

8. Procédé selon la revendication 1 **caractérisé en ce que**, dans une étape préalable ladite image est générée.

9. Terminal de saisie d'un texte, en relation avec au moins un dispositif sécurisé appelé serveur, **caractérisé en ce que** le terminal comporte des moyens pour
- recevoir, depuis ledit serveur, une image
- projeter ladite image sur un support, à destination de l'utilisateur
- repérer les positions spatiales des doigts de l'utilisateur au regard de ladite projection de ladite image
- restituer lesdites positions spatiales audit serveur

10. Terminal de saisie d'un texte selon la revendication 9 **caractérisé en ce que**, lesdits moyens pour repérer les positions spatiales des doigts de l'utilisateur sont des moyens de capture vidéo.

11. Terminal de saisie d'un texte selon la revendication 9 **caractérisé en ce que**, lesdits moyens pour repérer les positions spatiales des doigts de l'utilisateur sont des capteurs de pression positionnés dans ledit support de projection.

12. Terminal de saisie d'un texte selon la revendication 9 **caractérisé en ce que**, lesdits moyens pour repérer les positions spatiales des doigts de l'utilisateur sont des émetteurs et récepteurs radars.
